# FASCICULE DE BREVET EUROPEEN

(11) **EP 1 060 650 B1**
(45) Date de publication et mention de la délivrance du brevet: **17.09.2003**
(21) Numéro de dépôt: 00440167.5
(22) Date de dépôt: 08.06.2000
(51) Int. Cl.: A01D 34/66

(54) **Faucheuse**
Mähmaschine
Mowing machine

(30) Priorité: 17.06.1999 FR 9907871
(43) Date de publication de la demande: 20.12.2000
(73) Titulaire: KUHN S.A., 67706 Saverne Cedex (FR)
(72) Inventeur: Neuerburg, Horst, 67700 Saverne (FR); Kieffer, Fernand, 67700 Saverne (FR); Chalancon, Jean-Marie, 67700 Saverne (FR)

(56) Documents cités:
- EP-A- 0 809 928
- EP-A- 0 880 879
- DE-A- 2 400 894
- FR-A- 2 584 889

## Description

La présente invention se rapporte au domaine technique du machinisme agricole et en particulier au domaine des machines du type faucheuses ou faucheuses-conditionneuses. La présente invention concerne plus particulièrement une faucheuse ou faucheuse-conditionneuse destinée à être accrochée au système de relevage d'un tracteur. De telles machines sont en général pourvues d'un mécanisme de coupe à repliage vertical vers le haut ou longitudinal vers l'arrière pour le transport sur route. Les machines en question peuvent donc être disposées en position de transport. Le mécanisme de coupe d'une telle machine peut, de préférence, pivoter entre une position de transport et au moins une position de travail. Dans la suite, il sera fait allusion, plus particulièrement, à une faucheuse à disques, mais l'invention ne se limite pas à cet exemple particulier de faucheuses. D'autres machines, telles que des faucheuses à tambours ou des faucheuses alternatives, ne sortent pas du cadre de la présente invention.

Il est connu de réaliser une faucheuse comportant :
- un mécanisme de coupe s'étendant, au travail, transversalement à la direction de travail,
- une structure d'attelage destinée à être liée à un véhicule moteur,
- une poutre porteuse liée d'une part au mécanisme de coupe au moyen d'une première articulation d'axe dirigé vers l'avant, et d'autre part directement ou indirectement à la structure d'attelage au moyen d'une deuxième articulation d'axe dirigé vers l'avant et d'une troisième articulation d'axe dirigé vers le haut, laquelle permet le pivotement de la deuxième articulation par rapport à la structure d'attelage,
- des moyens de positionnement agissant sur la poutre porteuse pour permettre de déplacer conjointement ladite poutre porteuse et le mécanisme de coupe entre au moins une position de transport et une autre position, et inversement, par pivotement de la poutre porteuse et du mécanisme de coupe autour de l'axe de la troisième articulation, et
- un organe de soulèvement agissant sur la poutre porteuse pour permettre de déplacer conjointement ladite poutre porteuse et le mécanisme de coupe entre une position de travail et une position de manoeuvre.

En effet, cette faucheuse connue peut être mise dans une position de transport dans laquelle la poutre porteuse et le mécanisme de coupe sont pivotés horizontalement vers l'arrière, à l'aide des moyens de positionnement.

L'organe de soulèvement est constitué d'un vérin hydraulique monté entre la structure d'attelage et la poutre porteuse, de manière à soulever le mécanisme de coupe pour les manoeuvres en bout de champ. Le système de relevage du tracteur supportant la structure d'attelage reste donc dans la même position vis-à-vis du tracteur. Pour des opérations de coupe, l'organe de soulèvement permet de faire reposer le mécanisme de coupe sur le sol. Le mécanisme de coupe est alors dans une position de travail.

De telles faucheuses connues semblent assez sensibles aux irrégularités du sol sur lequel se déplace le tracteur, avec le mécanisme de coupe en position relevée de manoeuvre ou de transport. Les chocs et les mouvements brusques du mécanisme de coupe peuvent se transmettre directement à la structure d'attelage et à la poutre porteuse. Certaines articulations et pièces sont par conséquent très sollicitées, ce qui est souvent à l'origine de détériorations ou d'usures prématurées, surtout lorsque la faucheuse est en position de transport.

Il est également connu, par l'intermédiaire du document EP 0 880 879, de réaliser une faucheuse comportant une structure d'attelage liée à un véhicule moteur au moyen d'un point d'attelage supérieur et deux points d'attelage inférieurs. L'un des points d'attelage inférieurs est lié à un dispositif, lequel permet de déplacer la structure d'attelage par rapport audit point d'attelage inférieur. Le dispositif, en l'occurrence un vérin hydraulique relié à une chambre d'azote, permet d'amener la faucheuse d'une position de travail à une position relevée et inversement. Le dispositif décrit permet également d'obtenir un amortissement lorsque la faucheuse est dans une position relevée. En revanche, cette fonction d'amortissement n'est plus assurée lorsque la faucheuse est en position de transport.

Le but de la présente invention vise donc à remédier aux inconvénients de l'état de la technique en limitant les effets des chocs et des mouvements brusques subis par la faucheuse, notamment la structure d'attelage, indépendamment du positionnement du mécanisme de coupe.

Les objets assignés à la présente invention sont atteints à l'aide d'une faucheuse caractérisée en ce que l'organe de soulèvement est associé à un organe d'amortissement agissant sur la poutre porteuse pour notamment absorber les mouvements brusques de ladite poutre porteuse et du mécanisme de coupe par rapport à la structure d'attelage lorsque ladite poutre porteuse et ledit mécanisme de coupe sont dans la position de manoeuvre, respectivement dans une position de transport.

La faucheuse conforme à l'invention est remarquable dans la mesure où, selon un exemple de réalisation, l'organe de soulèvement et l'organe d'amortissement sont montés directement ou indirectement entre la structure d'attelage et la poutre porteuse.

En outre, la faucheuse conforme à l'invention peut comporter un moyen de blocage du pivotement du mécanisme de coupe autour de l'axe de la première articulation.

La faucheuse conforme à l'invention peut également comporter un moyen d'allégement du mécanisme de coupe permettant de réduire la pression avec laquelle ledit mécanisme de coupe repose au sol. Ce moyen d'allégement agit directement ou indirectement entre la structure d'attelage et la poutre porteuse.

L'organe de soulèvement et l'organe d'amortissement sont, par exemple, montés en série.

Avantageusement les moyens de positionnement sont aptes à pivoter la poutre porteuse et le mécanisme de coupe sensiblement horizontalement vers l'arrière.

D'autres caractéristiques et avantages de la présente invention ressortiront de la description détaillée donnée à titre d'exemple ci-après, en référence aux figures annexées dans lesquelles
- la **figure 1** représente un exemple de réalisation d'une faucheuse conforme à l'invention, en position de travail,
- la **figure 2a** représente une vue partielle et agrandie d'une partie de la faucheuse conforme à l'invention,
- la **figure 2b** représente un détail partiellement en coupe de la figure 2a,
- la **figure 3a** représente une faucheuse conforme à l'invention, dans une position relevée de manoeuvre,
- la **figure 3b** représente un détail de la figure 3a,
- la **figure 4a** représente une faucheuse conforme à l'invention, en position de transport,
- la **figure 4b** représente un détail agrandi de la figure 4a,
- la **figure 5a** représente une faucheuse conforme à l'invention décrochée du système de relevage d'un tracteur,
- la **figure 5b** représente un détail agrandi de la figure 5a.

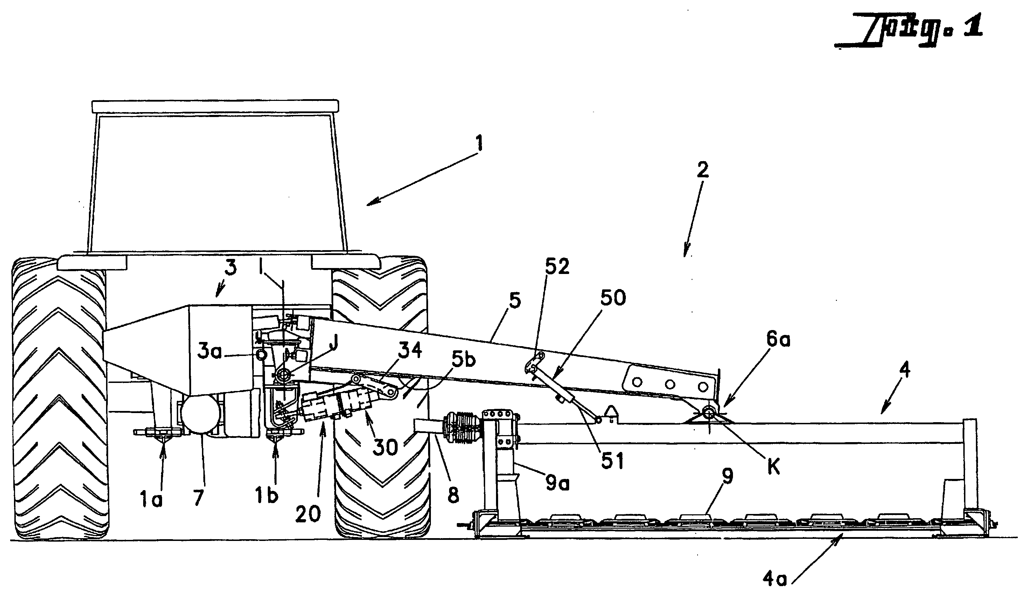

La figure 1 représente un tracteur (1) sur lequel est attelé un exemple de réalisation d'une faucheuse (2) conforme à l'invention. La faucheuse (2) comporte une structure d'attelage (3) destinée à être attelée au système de relevage du tracteur (1), et notamment à des points d'attelage inférieurs (1a, 1b) et supérieur.

La faucheuse (2) comporte également un mécanisme de coupe (4) suspendu à une poutre porteuse (5) à l'aide d'une première articulation (6a) d'axe (K) dirigé vers l'avant. Cette première articulation (6a) constitue, par exemple, une suspension du type pendulaire permettant au mécanisme de coupe (4) de s'adapter aux dénivellations du sol.

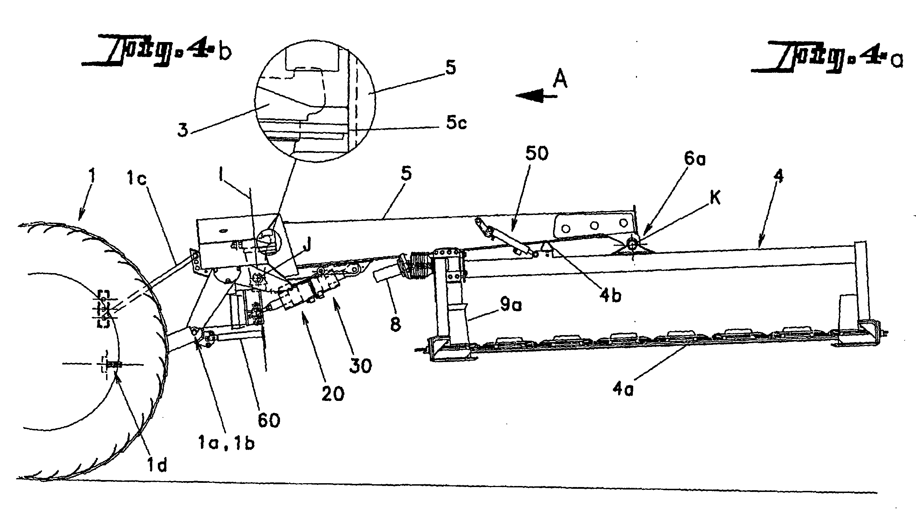

La faucheuse (2) comporte également un carter de renvoi (7), monté sur la structure d'attelage (3), permettant de transmettre un mouvement de rotation suivant une direction inclinée, par exemple à angle droit, d'une prise de force (1d) (figure 4b) du tracteur (1) vers le mécanisme de coupe (4). Le mouvement de rotation transmis par la prise de force (1d) du tracteur (1) permet ainsi d'animer le mécanisme de coupe (4) à l'aide d'un arbre de transmission (8) orienté sensiblement orthogonalement à l'arbre de sortie de la prise de force (1d) du tracteur (1), lorsque la faucheuse (2) est en position de travail ou de manoeuvre.

L'arbre de transmission (8) n'est que partiellement représenté aux figures pour des raisons de clarté, et il est évident que ledit arbre de transmission (8) s'étend du carter de renvoi (7) au mécanisme de coupe (4).

L'arbre de transmission (8) est relié à un lamier (4a) supportant par exemple des disques (9) entraînés en rotation par un organe de liaison (9a). L'animation des disques (9) ou d'autres organes de coupe est connue en soi.

La faucheuse (2) conforme à l'invention comporte également des moyens de positionnement agissant sur la poutre porteuse (5) pour déplacer le mécanisme de coupe (4) entre au moins une position de transport et une autre position, par exemple de travail. Cette dernière est représentée à la figure 1 et correspond à un positionnement latéral du mécanisme de coupe (4) par rapport à la direction d'avance (A) (figure 4a) du tracteur (1). La direction d'avance (A) est orthogonale au plan de la figure 1, laquelle montre le tracteur (1) et la faucheuse (2) en vue arrière. Le déplacement du mécanisme de coupe (4) se fait conjointement avec la poutre porteuse (5).

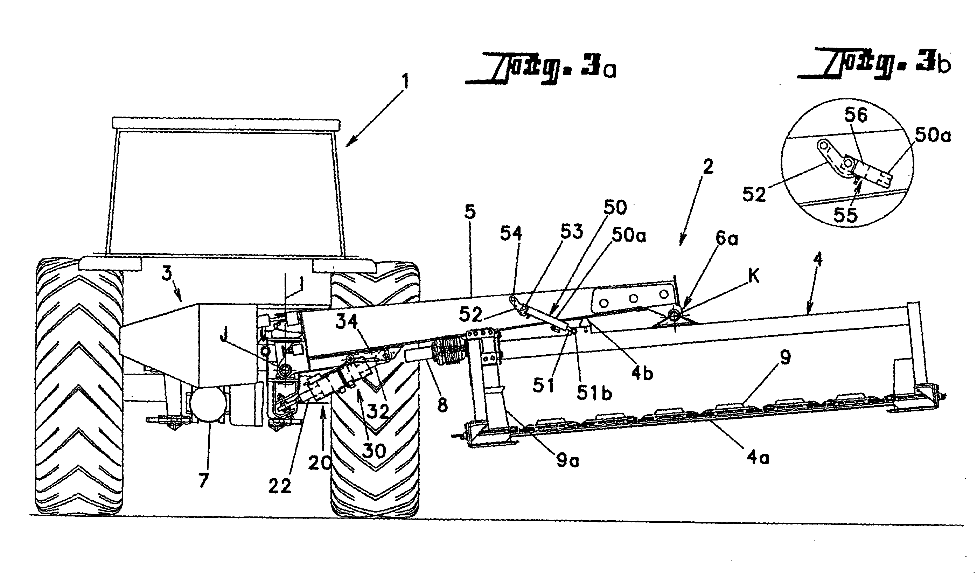

La faucheuse (2) conforme à l'invention est également pourvue d'un organe de soulèvement (20) pour déplacer conjointement le mécanisme de coupe (4) et la poutre porteuse (5) entre une position abaissée (figure 1) et une position de manoeuvre. Cette dernière, par exemple représentée à la figure 3a, correspond à une position relevée par rapport à une position de travail et permet de passer facilement sur des andains de produits de récolte coupés.

L'organe de soulèvement (20) est donc avantageux dans la mesure où il permet de soulever la poutre porteuse (5) et le mécanisme de coupe (4) afin d'effectuer des manoeuvres en bout de champ. L'organe de soulèvement (20) remplace l'actionnement du système de relevage supportant la structure d'attelage (3). Cette dernière reste donc dans une position optimale vis-à-vis du tracteur (1) pour toute l'opération de coupe et de manoeuvre.

L'organe de soulèvement (20) est par ailleurs associé à un organe d'amortissement (30) pour absorber les mouvements brusques du mécanisme de coupe (4) et de la poutre porteuse (5). L'organe d'amortissement (30) absorbe les mouvements brusques subis par le mécanisme de coupe (4) et la poutre porteuse (5) lorsque ledit mécanisme de coupe (4) est en position de transport ou de manoeuvre. L'organe de soulèvement (20) et l'organe d'amortissement (30) sont avantageusement montés directement ou indirectement entre la structure d'attelage (3) et la poutre porteuse (5), comme le montrent les figures 1 à 5. L'organe de soulèvement (20) et l'organe d'amortissement (30) sont de préférence montés en série.

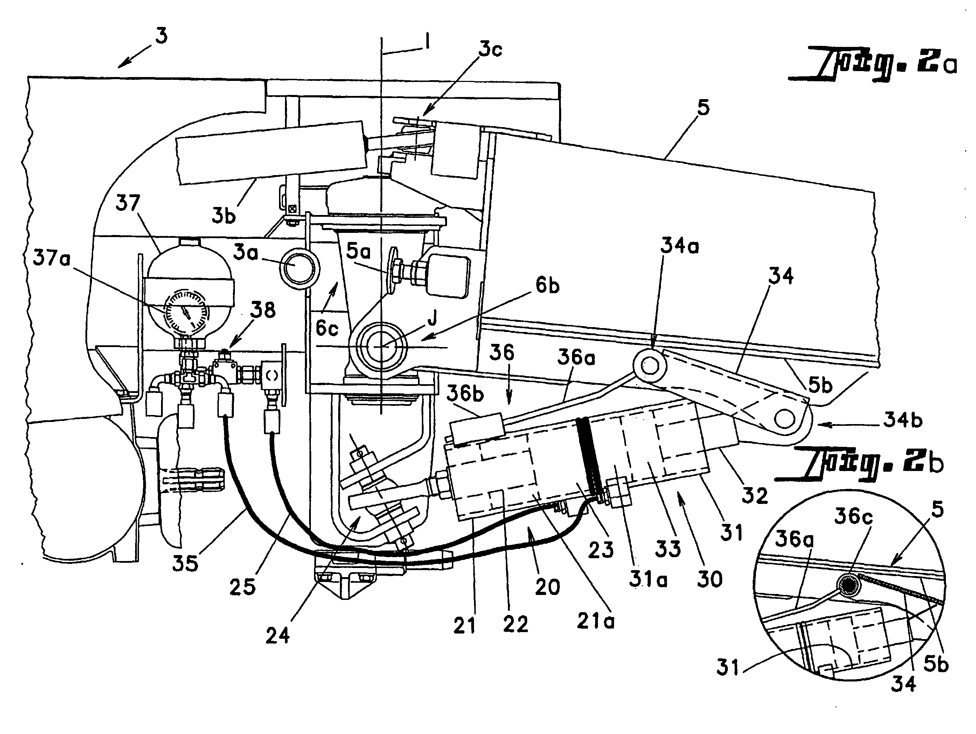

La figure 2a représente une vue d'une partie de la faucheuse (2) conforme à l'invention. Les moyens de positionnement comprennent, par exemple, un vérin hydraulique, non représenté à la figure 2a, permettant de mettre la poutre porteuse (5) et le mécanisme de coupe (4) dans une position de transport en partant d'une position de manoeuvre ou de travail. La structure d'attelage (3) est donc pourvue de moyens, connus en soi, pour pivoter la poutre porteuse (5) autour d'un axe (I) sensiblement vertical, grâce à une troisième articulation (6c).

Avantageusement, la faucheuse (2) comporte également un moyen d'allégement du mécanisme de coupe (4) de manière à contrôler la réaction du sol sur le mécanisme de coupe (4), lorsque ce dernier repose sur le sol pendant le travail. Le moyen d'allégement est avantageusement réalisé avec un vérin oléo-pneumatique d'allégement (3b). Ce dernier est monté entre la structure d'attelage (3) et la poutre porteuse (5). Le contrôle de la pression avec laquelle le mécanisme de coupe (4) repose sur le sol autorise son adaptation au sol. Ceci est réalisé de façon connue à l'aide du montage de la poutre porteuse (5) sur la structure d'attelage (3). La poutre porteuse (5) est montée sur la structure d'attelage (3) notamment à l'aide d'une deuxième articulation (6b) d'axe de pivotement (J) sensiblement orthogonal à l'axe (I). Ainsi, en augmentant la pression d'huile dans le vérin d'allégement (3b), ce dernier a tendance à tirer sur la poutre porteuse (5), via une articulation à rotule (3c). Le vérin d'allégement (3b) exerce donc un couple sur la poutre porteuse (5) par rapport à l'axe de pivotement (J) de manière à diminuer la réaction du sol sur le mécanisme de coupe (4).

L'axe de pivotement (J) est donc amené à tourner dans un plan sensiblement orthogonal à l'axe (I) lors d'un basculement de la poutre porteuse (5) entre une position de transport et une position de travail ou inversement. La position de transport est délimitée par exemple à l'aide de butées (3a, 5a) solidaires respectivement de la structure d'attelage (3) et de la poutre porteuse (5).

L'organe de soulèvement (20) permet également de pivoter la poutre porteuse (5) autour de l'axe de pivotement (J), notamment en relevant ladite poutre porteuse (5) pour des manoeuvres en bout de champ ou pour le transport sur route.

L'organe de soulèvement (20) est constitué d'un vérin hydraulique présentant un premier cylindre (21) délimitant une première chambre (21a) dans laquelle se déplace une première tige de vérin (22). Cette dernière se termine par un premier piston (23) pour délimiter le volume accessible par l'huile provenant d'une source hydraulique du tracteur (1) ou indépendante. Dans l'exemple représenté à la figure 2a, le premier piston (23) est en bout de course dans la première chambre (21a). Ceci correspond à une évacuation totale de l'huile initialement contenue dans la première chambre (21a). Cette dernière est donc mise à la bâche.

Une telle situation se présente lorsque le mécanisme de coupe (4) et la poutre porteuse (5) sont en position de travail. Dans ce cas, le vérin d'allégement (3b) est actif.

L'organe d'amortissement (30) est constitué d'un vérin oléo-pneumatique présentant un second cylindre (31) délimitant une seconde chambre (31a) dans laquelle se déplace une seconde tige (32). Cette dernière se termine par un second piston (33) pour délimiter le volume accessible par l'huile provenant d'une source hydraulique.

Le premier cylindre (21) et le second cylindre (31) sont par exemple solidarisés l'un à l'autre par tous moyens connus.

Le vérin hydraulique de soulèvement (21-22-23) et le vérin oléo-pneumatique d'amortissement (31-32-33) sont réalisés avec un corps commun présentant deux chambres (21a, 31a). La première tige (22), débouchant de l'une (21a) des chambres (21a ; 31a), est articulée directement ou indirectement sur la structure d'attelage (3) et la seconde tige (32), débouchant de l'autre chambre (31a), est articulée directement ou indirectement sur la poutre porteuse (5).

Avantageusement la première tige (22) est celle du vérin hydraulique de soulèvement (21-22-23) et la seconde tige de vérin (32) est celle du vérin oléo-pneumatique d'amortissement (31-32-33).

La première tige (22) est montée sur la structure d'attelage (3), par exemple à l'aide d'une articulation à rotule (24).

La seconde tige de vérin (32) est reliée à la poutre porteuse (5) par l'intermédiaire d'une bielle (34) montée pivotante sur ladite poutre porteuse (5) et susceptible de venir en appui contre une butée (5b) complémentaire solidaire de ladite poutre porteuse (5).

Selon un exemple de réalisation préférentiel, la seconde tige de vérin (32) est articulée sur la bielle (34), elle-même articulée sur la poutre porteuse (5). La bielle (34) réalise ainsi la liaison entre la seconde tige (32) et la poutre (5), et ce à l'aide d'articulations (34a, 34b) du type cylindrique. La bielle (34) est montée sur la poutre porteuse (5) de manière à prendre appui, le cas échéant, contre la butée complémentaire (5b).

La première chambre (21a) et la seconde chambre (31a) sont alimentées respectivement par des conduites hydrauliques (25) et (35), lesquelles sont reliées à une source hydraulique via des organes de distribution (38).

Lorsque la conduite (25) est sous pression, l'huile pénètre dans la première chambre (21a) en déplaçant le premier piston (23). Ce dernier fait sortir au moins partiellement la première tige (22) dudit premier cylindre (21). L'extension du vérin hydraulique de soulèvement (21-22-23) permet de soulever la poutre porteuse (5) et par conséquent le mécanisme de coupe (4).

Il est évident que la bielle (34) vient en appui contre la butée complémentaire (5b) pour soulever la poutre porteuse (5). Ceci correspond à une position de manoeuvre ou de transport pour la faucheuse (2).

Lorsque la conduite (25) est mise à la bâche, l'huile contenue dans la première chambre (21a) est évacuée par le piston (23) sous l'effet du poids de l'ensemble constitué par la poutre porteuse (5) et le mécanisme de coupe (4). On retrouve alors la situation représentée à la figure 2a. Ceci correspond à une position de travail pour le mécanisme de coupe (4), c'est-à-dire une position dans laquelle ledit mécanisme de coupe (4) repose plus ou moins sur le sol en fonction de la pression régnant dans le vérin d'allégement (3b).

Le mécanisme de coupe (4) peut par exemple rencontrer un obstacle ou une dénivellation et se relever par rapport à sa position de travail initiale. La bielle (34) n'est alors plus en appui contre la butée complémentaire (5b). La bielle (34) permet donc d'éviter une traction sur le vérin hydraulique de soulèvement (21-22-23), laquelle aurait pour conséquence de déplacer le premier cylindre (21) et d'aspirer de l'huile dans la première chambre (21a), car la première tige (22) est retenue par l'articulation à rotule (24). Lorsque les dénivellations du sol le permettent, la poutre porteuse (5) et par conséquent le mécanisme de coupe (4) peuvent revenir dans la position de travail initiale, dans laquelle la bielle (34) prend appui contre la butée complémentaire (5b). Le mécanisme de coupe (4) suit ainsi les dénivellations du sol sous le contrôle du vérin d'allégement (3b).

Avantageusement le premier cylindre (21) est pourvu d'un système de blocage en rotation (36) réalisé par tous moyens pour empêcher le corps commun (21-31) de tourner sur lui-même autour de leur axe.

Le système de blocage en rotation (36) comporte par exemple une tige (36a) dont l'une des extrémités est engagée dans une pièce tubulaire (36b) solidaire du premier cylindre (21). La figure. 2b partiellement en coupe représente l'autre extrémité de la tige (36a) et plus précisément son montage sur la poutre porteuse (5). L'autre extrémité de la tige (36a) est, par exemple, pourvue d'un anneau (36c) monté sur l'axe de l'articulation cylindrique (34a).

Le vérin oléo-pneumatique d'amortissement (31-32-33) est relié à un vase d'expansion (37) contenant un gaz inerte du type azote. Le vase d'expansion (37) communique avec un organe indicateur de pression (37a) et avec la seconde chambre (31a) par l'intermédiaire des organes de distribution (38) et de la conduite (35). Ces derniers permettent, par exemple, à la mise en service de la faucheuse (2) de mettre la seconde chambre (31a) et le vase d'expansion (37) en communication avec une source hydraulique et d'y appliquer une pression correspondant au degré d'amortissement souhaité.

La position normale de la seconde tige (32) correspond alors à une extension maximale du vérin oléo-pneumatique d'amortissement (31-32-33).

Lorsque la poutre porteuse (5) est en position relevée par rapport à la position de travail ou en position de transport, les organes de distribution (38) permettent de maintenir le vérin hydraulique de soulèvement (21-22-23) en extension maximale. Tout choc ou mouvement brusque subi par la poutre porteuse (5) et le mécanisme de coupe (4) est alors transmis au second cylindre (31). Le deuxième piston (33) est alors amené à se déplacer dans la seconde chambre (31a) et à expulser au moins partiellement l'huile contenue dans la seconde chambre (31a) vers le vase d'expansion (37) contenant de l'azote sous pression. Cette expulsion contrôlée se fait via les organes de distribution (38) et permet ainsi d'amortir le mouvement du sous-ensemble constitué par la poutre porteuse (5) et le mécanisme de coupe (4).

La surpression régnant dans le vase d'expansion (37) et correspondant à la compression de l'azote permet ensuite au second piston (33) de revenir dans sa position initiale dans le second cylindre (31), en amortissant le mouvement du mécanisme de coupe (4).

La figure (3a) représente la faucheuse (2) conforme à l'invention dans une position relevée de manoeuvre. Le mécanisme de coupe (4) et la poutre porteuse (5) s'étendent sensiblement orthogonalement à la direction d'avance (A). Le vérin hydraulique de soulèvement (21-22-23) est en extension maximale et le vérin oléo-pneumatique d'amortissement (31-32-33) est prêt à amortir les mouvements brusques auxquels est soumis le mécanisme de coupe (4) et la poutre porteuse (5).

Selon l'exemple de réalisation représenté à la figure 3a, la faucheuse (2) comporte un moyen de blocage (50) du pivotement du mécanisme de coupe (4) autour de l'axe (K) de la première articulation (6a). Le mécanisme de coupe (4) peut alors conserver une orientation optimale vis-à-vis du sol.

Le moyen de blocage (50) comporte, par exemple, un vérin hydraulique complémentaire (50a) monté directement ou indirectement entre le mécanisme de coupe (4) et la poutre porteuse (5). Les conduites d'alimentation du vérin hydraulique complémentaire (50a) ne sont pas représentées afin de ne pas surcharger les figures.

Lorsque la faucheuse (2) est en position relevée de manoeuvre, le vérin hydraulique complémentaire (50a) est en contraction maximale, de manière à soulever au mieux la partie du mécanisme de coupe (4) située le plus près de la structure d'attelage (3). Sur la figure 3a cela correspond à la partie de mécanisme de coupe (4) située à gauche de la première articulation (6a). En outre, le mécanisme de coupe (4) est pourvu d'une butée additionnelle (4b) venant en appui contre la poutre porteuse (5) sous l'effet d'une contraction maximale du vérin hydraulique complémentaire (50a). Ce dernier présente une tige (51) montée sur le mécanisme de coupe (4) grâce à une articulation (51b) correspondante. La faucheuse (2) conforme à l'invention permet donc de passer plus facilement au-dessus d'andains lors de manoeuvres en bout de champ, grâce à une garde au sol améliorée et au blocage du pivotement du mécanisme de coupe (4).

Avantageusement, le vérin hydraulique complémentaire (50a) est articulé sur la poutre porteuse (5) par l'intermédiaire d'une biellette (52).

La biellette (52) est montée pivotante sur la poutre porteuse (5) et sur le vérin hydraulique complémentaire (50a).

La biellette (52) réalise avantageusement la liaison entre le cylindre du vérin hydraulique complémentaire (50a) et la poutre porteuse (5) par l'intermédiaire d'articulations (53, 54) respectives.

Selon un exemple de réalisation de la faucheuse (2) conforme à l'invention, le vérin hydraulique de soulèvement (21-22-23) et le vérin hydraulique complémentaire (50a) sont alimentés en parallèle de manière à provoquer une extension dudit vérin hydraulique de soulèvement (21-22-23) et une contraction dudit vérin hydraulique complémentaire (50a). En revanche, lorsque le mécanisme de coupe (4) se trouve dans une position de travail, le vérin hydraulique complémentaire (50a) est mis à la bâche. De ce fait, le vérin hydraulique complémentaire (50a) est susceptible de s'allonger ou de se contracter en fonction de l'orientation du mécanisme de coupe (4) reposant sur le sol. Le vérin hydraulique complémentaire (50a) est, par exemple, en extension maximale lorsque le mécanisme de coupe (4) repose sur le sol sensiblement dépourvu de dénivellation, comme on peut le voir sur la figure 1. La biellette (52) est articulée sur la poutre porteuse (5) de manière à permettre audit mécanisme de coupe (4) de pivoter autour de l'axe (K) de la première articulation (6a), sans toutefois provoquer une contraction ou une extension dudit vérin hydraulique complémentaire (50a). L'orientation relative et variable entre les axes (non représentés) respectifs passant par les articulations (54 - 53) et les articulations (53 - 51b) permet de modifier la distance entre les articulations (54) et (51b). Une telle modification correspond au pivotement du mécanisme de coupe (4) autour de l'axe (K). L'inclinaison variable entre la biellette (52) et le vérin hydraulique complémentaire (50a) permet ainsi au mécanisme de coupe (4) de s'adapter aux dénivellations du sol en évitant une traction ou une poussée sur la tige (51).

Selon un exemple de réalisation avantageux de la faucheuse (2) conforme à l'invention (figure 3b), le vérin hydraulique complémentaire (50a) comporte un moyen de rappel (55) permettant d'emmagasiner de l'énergie lors de la contraction dudit vérin hydraulique complémentaire (50a). Le moyen de rappel (55) est par exemple constitué d'une chambre (56) remplie d'air qui est comprimée lors de la contraction du vérin hydraulique complémentaire (50a). Le moyen de rappel (55) permet à la tige (51) de sortir de son cylindre lorsque la conduite d'alimentation du vérin hydraulique complémentaire (50a) est ramenée à la bâche. L'énergie emmagasinée par le moyen de rappel (55) est alors restituée avec l'allongement du vérin hydraulique complémentaire (50a). Le mécanisme de coupe (4) retrouve alors de façon automatique son orientation initiale correspondant à une position de travail. La chambre (56) peut, selon un autre exemple de réalisation, être remplacée par tout autre moyen de rappel, tel qu'un moyen élastique du type ressort.

La figure 4a représente une faucheuse (2), conforme à l'invention, dans une position de transport. Le tracteur (1) n'est montré que partiellement et le mécanisme de coupe (4) est pivoté vers l'arrière du tracteur pour s'aligner sensiblement avec la direction d'avance (A). Le vérin hydraulique complémentaire (50a) est, de préférence, en contraction maximale et le vérin hydraulique de soulèvement (21-22-23) est en extension maximale. Dans cette position de transport, la poutre porteuse (5) vient en appui contre la structure d'attelage (3). Cet appui est réalisé avec une butée additionnelle (5c) (figure 4b), lorsque l'organe de soulèvement (20) est en extension maximale. En outre, la faucheuse (2) est conçue de manière à positionner la poutre porteuse (5) contre cette butée additionnelle (5c) en fin de pivotement autour de l'axe (1) en position de transport.

L'organe d'amortissement (30) remplit alors pleinement sa fonction pour amortir notamment les accélérations sensiblement verticales du mécanisme de coupe (4). Les différentes articulations de la structure d'attelage (3) et notamment les points d'attelage inférieurs (1a, 1b) et la barre d'attelage supérieure (1c) sont ainsi moins sollicités lors du transport de la faucheuse (2).

La faucheuse (2), conforme à l'invention, comporte également une béquille (60) escamotable pour dételer et déposer ladite faucheuse (2).

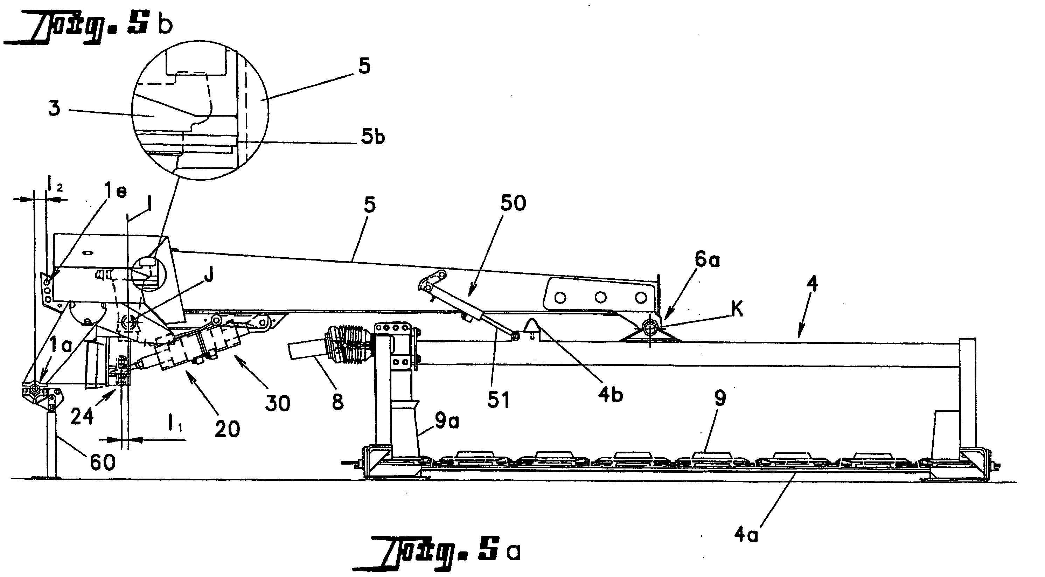

Les figures 5a et 5b représentent la faucheuse (2), conforme à l'invention, une fois dételée du tracteur (1). Dans cette position, la béquille (60) s'étend sensiblement verticalement et repose sur le sol.

Avantageusement l'axe de l'articulation (24) se situe dans un plan d'extension décalé d'une certaine distance par rapport au plan d'extension contenant l'axe (J). Ce décalage (11), schématisé sur la figure Sa, permet d'orienter le mouvement de la poutre porteuse (5) de manière à ce que cette dernière se positionne derrière et contre une partie de la structure d'attelage (3) avec la butée additionnelle (5b).

Le positionnement de la butée additionnelle (5b) dépend donc directement du décalage (I1).

La faucheuse (2) présente également un trou (1e) pour le montage d'une extrémité de la barre d'attelage supérieure (1c). Le trou (1e) est décalé, suivant une direction horizontale parallèle à la direction d'avance (A), par rapport aux points d'attelage inférieurs (1a, 1b). Ce décalage (I2), en combinaison avec une hauteur déterminée de la béquille (60) permet, lorsque la faucheuse (2) repose sur le sol, de positionner la structure d'attelage (3) de façon optimale par rapport à la poutre porteuse (5).

En effet les décalages (I1, I2), la hauteur de la béquille (60) et le positionnement de la butée additionnelle (5c) permettent d'accrocher la faucheuse (2) de façon optimale au tracteur (1), car le réglage en longueur de la barre d'attelage supérieure (1c), qu'il est nécessaire d'effectuer pour ledit accrochage, correspond alors à un réglage optimal pour le positionnement du mécanisme de coupe (4) dans une position de travail latérale. Avantageusement, la poutre porteuse (5) ne prend appui sur la structure d'attelage (3) avec la butée additionnelle (5c), que dans une position repliée vers l'arrière. L'organe de soulèvement (20) en extension maximale permet de maintenir la butée additionnelle (5c) en appui contre la structure d'attelage (3) lorsque la faucheuse (2) est attelée au tracteur (1). La structure d'attelage (3) est conçue pour que la butée additionnelle (5c) n'est plus opérationnelle lorsque la poutre porteuse (5) est dans une position de travail latérale. La poutre porteuse (5) doit bien évidemment pouvoir pivoter autour de l'axe (J) pendant le travail. Le décalage (I1), et par conséquent le positionnement de l'articulation (24) vis-à-vis de l'axe (J), est choisi pour donner une orientation ou un piquage optimal à la poutre porteuse (5) lors d'un pivotement entre une position de transport et une position de travail du mécanisme de coupe (4).

Par ailleurs, lors de la dépose de la faucheuse (2) conforme à l'invention, le vérin hydraulique de soulèvement (21-22-23) et le vérin hydraulique complémentaire (50a) sont reliés à la bâche. Le mécanisme de coupe (4) repose alors directement sur le sol. La structure d'attelage (3) repose sur le sol par l'intermédiaire de la béquille (60), et la poutre porteuse (5) est en appui sur la structure d'attelage (3) avec la butée additionnelle (5c) (voir par exemple la figure 5b). Ainsi, lorsque la faucheuse (2) est attelée au tracteur (1), il ne sera plus nécessaire d'effectuer un réglage en longueur de la barre d'attelage supérieure (1c). Le mécanisme de coupe (4) sera opérationnel dès qu'il sera disposé dans sa position de travail latérale. Le lamier (4a) supportant les disques (9) présente alors une inclinaison optimale vis-à-vis du sol et du fourrage à faucher.

Lorsque le mécanisme de coupe (4) repose sur le sol dans sa position de travail, l'organe d'amortissement (30) est inopérant et c'est le vérin d'allégement (3b) qui permet de choisir le degré d'adaptation au sol du mécanisme de coupe (4) de même qu'un amortissement. En transport, le vérin d'allégement (3b) est inopérant et c'est le vérin oléo-pneumatique d'amortissement (31-32-33) qui devient actif. Ceci représente un avantage appréciable.

## Revendications

1. Faucheuse comportant
- un mécanisme de coupe (4) s'étendant, au travail, transversalement à la direction de travail (A),
- une structure d'attelage (3) destinée à être liée à un véhicule moteur (1),
- une poutre porteuse (5) liée d'une part au mécanisme de coupe (4) au moyen d'une première articulation (6a) d'axe (K) dirigé vers l'avant, et d'autre part directement ou indirectement à la structure d'attelage (3) au moyen d'une deuxième articulation (6b) d'axe (J) dirigé vers l'avant et d'une troisième articulation (6c) d'axe (I) dirigé vers le haut, laquelle permet le pivotement de la deuxième articulation (6b) par rapport à la structure d'attelage (3),
- des moyens de positionnement agissant sur la poutre porteuse (5) pour permettre de déplacer conjointement ladite poutre porteuse (5) et le mécanisme de coupe (4) entre au moins une position de transport et une autre position, et inversement, par pivotement de la poutre porteuse (5) et du mécanisme de coupe (4) autour de l'axe (I) de la troisième articulation (6c), et
- un organe de soulèvement (20) agissant sur la poutre porteuse (5) pour permettre de déplacer conjointement ladite poutre porteuse (5) et le mécanisme de coupe (4) entre une position de travail et une position de manoeuvre,
***caractérisée en ce* que** l'organe de soulèvement (20) est associé à un organe d'amortissement (30) agissant sur la poutre porteuse (5) pour notamment absorber les mouvements brusques de ladite poutre porteuse (5) et du mécanisme de coupe (4) par rapport à la structure d'attelage (3) lorsque ladite poutre porteuse (5) et ledit mécanisme de coupe (4) sont dans la position de manoeuvre, respectivement dans une position de transport.

2. Faucheuse selon la revendication 1, ***caractérisée en ce* que** l'organe de soulèvement (20) et l'organe d'amortissement (30) sont montés directement ou indirectement entre la structure d'attelage (3) et la poutre porteuse (5).

3. Faucheuse selon la revendication 1 ou 2, ***caractérisée en ce* que** l'organe de soulèvement (20) et l'organe d'amortissement (30) sont montés en série.

4. Faucheuse selon l'une quelconque des revendications 1 à 3, ***caractérisée en ce* que** l'organe de soulèvement (20) est un vérin hydraulique de soulèvement (21-22-23).

5. Faucheuse selon l'une quelconque des revendications 1 à 4, ***caractérisée en ce* que** l'organe d'amortissement (30) est un vérin oléo-pneumatique d'amortissement (31-32-33).

6. Faucheuse selon les revendications 4 et 5, ***caractérisée en ce* que** le vérin hydraulique de soulèvement (21-22-23) et le vérin oléo-pneumatique d'amortissement (31-32-33) sont réalisés avec un corps commun (21-31) présentant deux chambres (21a, 31a), une première tige de vérin (22) débouchant de l'une (21a) des chambres (21a, 31a) étant articulée directement ou indirectement sur la structure d'attelage (3), une seconde tige de vérin (32) débouchant de l'autre chambre (31a) étant articulée directement ou indirectement sur la poutre porteuse (5).

7. Faucheuse selon la revendication 6, ***caractérisée en ce* que** la première tige de vérin (22) est celle du vérin hydraulique de soulèvement (21-22-23) et la seconde tige de vérin (32) celle du vérin oléo-pneumatique d'amortissement (31 -32-33).

8. Faucheuse selon la revendication 6 ou 7, ***caractérisée en ce* que** la seconde tige de vérin (32) est reliée à la poutre porteuse (5) par l'intermédiaire d'une bielle (34) montée pivotante sur ladite poutre porteuse (5) et susceptible de venir en appui contre une butée complémentaire (5b) solidaire de ladite poutre porteuse (5).

9. Faucheuse selon l'une quelconque des revendications 1 à 8, ***caractérisée en ce* qu'**elle comporte en sus un moyen de blocage (50) du pivotement du mécanisme de coupe (4) autour de l'axe (K) de la première articulation (6a).

10. Faucheuse selon la revendication 9, ***caractérisée en ce* que** ledit moyen de blocage (50) comporte un vérin hydraulique complémentaire (50a) monté directement ou indirectement entre le mécanisme de coupe (4) et la poutre porteuse (5).

11. Faucheuse selon la revendication 10, ***caractérisée en ce* que** ledit vérin hydraulique complémentaire (50a) est relié à la poutre porteuse (5) par l'intermédiaire d'une biellette (52) montée pivotante sur ladite poutre porteuse (5).

12. Faucheuse selon les revendications 4 et 11, ***caractérisée en ce* que** le vérin hydraulique de soulèvement (21-22-23) et le vérin hydraulique complémentaire (50a) sont alimentés en parallèle de manière à provoquer une extension dudit vérin hydraulique de soulèvement (21-22-23) et une contraction dudit vérin hydraulique complémentaire (50a).

13. Faucheuse selon la revendication 12, ***caractérisée en ce* que** le vérin hydraulique complémentaire (50a) comporte un moyen de rappel (55) permettant d'emmagasiner de l'énergie lors de la contraction dudit vérin hydraulique complémentaire (50a).

14. Faucheuse selon la revendication 13, ***caractérisée en ce* que** ledit moyen de rappel (55) est constitué d'une chambre (56) remplie d'air qui est comprimée lors de la contraction du vérin hydraulique complémentaire (50a).

15. Faucheuse selon l'une quelconque des revendications 1 à 14, ***caractérisée en* ce que** les moyens de positionnement sont notamment aptes à pivoter la poutre porteuse (5) et le mécanisme de coupe (4) sensiblement horizontalement vers l'arrière du tracteur (1).

16. Faucheuse selon l'une quelconque des revendications 1 à 15, ***caractérisée en ce* qu'**elle comporte un moyen d'allégement du mécanisme de coupe (4) permettant de réduire la pression avec laquelle ledit mécanisme de coupe (4) repose au sol.

17. Faucheuse selon la revendication 16, ***caractérisée en ce* que** ledit moyen d'allégement agit directement ou indirectement entre la structure d'attelage (3) et la poutre porteuse (5).

18. Faucheuse selon la revendication 16 ou 17, ***caractérisée en ce* que** le moyen d'allégement est un vérin oléo-pneumatique d'allégement (3b).

19. Faucheuse selon l'une quelconque des revendications 1 à 18, ***caractérisée en ce* que** c'est une faucheuse à disques (9) avec ou sans organes de traitement du produit coupé.

## Patentansprüche

1. Mähmaschine, die
- einen Schneidmechanismus (4), der sich im Betrieb quer zur Arbeitsrichtung (A) erstreckt,
- eine Kupplungskonstruktion (3), die mit einem Motorfahrzeug (1) verbunden werden soll,
- einen Stützträger (5), der einerseits mittels eines ersten Gelenks (6a) mit einer nach vorne gerichteten Achse (K) mit dem Schneidmechanismus (4) und andererseits mittels eines zweiten Gelenks (6b) mit einer nach vorne gerichteten Achse (J) und eines dritten Gelenks (6c) mit einer nach oben gerichteten Achse (I) direkt oder indirekt mit der Kupplungskonstruktion (3) verbunden ist, das das Schwenken des zweiten Gelenks (6b) bezüglich der Kupplungskonstruktion (3) gestattet,
- Positioniermittel, die auf den Stützträger (5) einwirken, um die gemeinsame Verschiebung des Stützträgers (5) und des Schneidmechanismus (4) zwischen mindestens einer Transportstellung und einer anderen Stellung und umgekehrt durch Schwenken des Stützträgers (5) und des Schneidmechanismus (4) um die Achse (I) des dritten Gelenks (6c) zu gestatten, und
- ein Hubelement (20), das auf den Stützträger (5) einwirkt, um die gemeinsame Verschiebung des Stützträgers (5) und des Schneidmechanismus (4) zwischen einer Arbeitsstellung und einer Manövrierstellung zu gestatten,
umfasst,
***dadurch gekennzeichnet,* dass** das Hubelement (20) einem Dämpfungselement (30) zugeordnet ist, das auf den Stützträger (5) einwirkt, um insbesondere die plötzlichen Bewegungen des Stützträgers (5) und des Schneidmechanismus (4) bezüglich der Kupplungskonstruktion (3) aufzunehmen, wenn sich der Stützträger (5) und der Schneidmechanismus (4) in der Manövrierstellung bzw. in einer Transportstellung befinden.

2. Mähmaschine nach Anspruch 1, ***dadurch gekennzeichnet,* dass** das Hubelement (20) und das Dämpfungselement (30) direkt oder indirekt zwischen der Kupplungskonstruktion (3) und dem Stützträger (5) angebracht sind.

3. Mähmaschine nach Anspruch 1 oder 2, ***dadurch gekennzeichnet,* dass** das Hubelement (20) und das Dämpfüngselement (30) in Reihe angebracht sind.

4. Mähmaschine nach irgend einem der Ansprüche 1 bis 3, ***dadurch gekennzeichnet,* dass** das Hubelement (20) ein hydraulischer Hubzylinder (21-22-23) ist.

5. Mähmaschine nach irgend einem der Ansprüche 1 bis 4, ***dadurch gekennzeichnet,* dass** das Dämpfungselement (30) ein hydropneumatischer Dämpfüngszylinder (31-32-33) ist.

6. Mähmaschine nach den Ansprüchen 4 und 5, ***dadurch gekennzeichnet,* dass** der hydraulische Hubzylinder (21-22-23) und der hydropneumatische Dämpfüngszylinder (31-32-33) mit einem gemeinsamen Körper (21-31) ausgeführt sind, der zwei Kammern (21 a, 31 a) aufweist, wobei eine erste Zylinderstange (22), die aus einer (21a) der Kammern (21a, 31 a) heraustritt, direkt oder indirekt mit der Kupplungskonstruktion (3) verbunden ist und eine zweite Zylinderstange (32), die aus der anderen Kammer (31 a) heraustritt, direkt oder indirekt mit dem Stützträger (5) verbunden ist.

7. Mähmaschine nach Anspruch 6, ***dadurch gekennzeichnet,* dass** die erste Zylinderstange (22) die des hydraulischen Hubzylinders (21-22-23) und die zweite Zylinderstange (32) die des hydropneumatischen Dämpfungszylinders (31-32-33) ist.

8. Mähmaschine nach Anspruch 6 oder 7, ***dadurch gekennzeichnet,* dass** die zweite Zylinderstange (32) mittels einer schwenkbar am Stützträger (5) angebrachten Verbindungsstange (34), die an einem fest mit dem Stützträger (5) verbundenen zusätzlichen Anschlag (5b) zur Anlage kommen kann, mit dem Stützträger (5) verbunden ist.

9. Mähmaschine nach irgend einem der Ansprüche 1 bis 8, ***dadurch gekennzeichnet,* dass** sie darüber hinaus ein Mittel (50) zur Sperrung des Schwenkens des Schneidmechanismus (4) um die Achse (K) des ersten Gelenks (6a) aufweist.

10. Mähmaschine nach Anspruch 9, ***dadurch gekennzeichnet,* dass** das Sperrmittel (50) einen zusätzlichen Hydraulikzylinder (50a) aufweist, der direkt oder indirekt zwischen dem Schneidmechanismus (4) und dem Stützträger (5) angebracht ist.

11. Mähmaschine nach Anspruch 10, ***dadurch gekennzeichnet,* dass** der zusätzliche Hydraulikzylinder (50a) mittels einer schwenkbar am Stützträger (5) angebrachten Schwinge (52) mit dem Stützträger (5) verbunden ist.

12. Mähmaschine nach den Ansprüchen 4 und 11, ***dadurch gekennzeichnet,* dass** der hydraulische Hubzylinder (21-22-23) und der zusätzliche Hydraulikzylinder (50a) parallel versorgt werden, damit ein Ausziehen des hydraulischen Hubzylinders (21-22-23) und ein Zusammenziehen des zusätzlichen Hydraulikzylinders (50a) bewirkt werden.

13. Mähmaschine nach Anspruch 12, ***dadurch gekennzeichnet,* dass** der zusätzliche Hydraulikzylinder (50a) ein Rückstellmittel (55) aufweist, das ein Speichern von Energie beim Zusammenziehen des zusätzlichen Hydraulikzylinders (50a) gestattet.

14. Mähmaschine nach Anspruch 13, ***dadurch gekennzeichnet,* dass** das Rückstellmittel (55) aus einer Kammer (56) besteht, die mit Luft gefüllt ist, welche beim Zusammenziehen des zusätzlichen Hydraulikzylinders (50a) komprimiert wird.

15. Mähmaschine nach irgend einem der Ansprüche 1 bis 14, ***dadurch gekennzeichnet,* dass** die Positioniermittel insbesondere den Stützträger (5) und den Schneidmechanismus (4) im Wesentlichen horizontal zum hinteren Teil des Traktors (1) schwenken können.

16. Mähmaschine nach irgend einem der Ansprüche 1 bis 15, ***dadurch gekennzeichnet,* dass** sie ein Mittel zur Entlastung des Schneidmechanismus (4) aufweist, das es gestattet, den Druck, mit dem der Schneidmechanismus (4) auf dem Boden aufliegt, zu verringern.

17. Mähmaschine nach Anspruch 16, ***dadurch gekennzeichnet,* dass** das Entlastungsmittel direkt oder indirekt zwischen der Kupplungskonstruktion (3) und dem Stützträger (5) wirkt.

18. Mähmaschine nach Anspruch 16 oder 17, ***dadurch gekennzeichnet,* dass** das Entlastungsmittel ein hydropneumatischer Entlastungszylinder (3b) ist.

19. Mähmaschine nach irgend einem der Ansprüche 1 bis 18, ***dadurch gekennzeichnet,* dass** es sich dabei um einen Scheibenmäher (9) mit oder ohne Elementen zur Behandlung des Schnittguts handelt.

## Claims

1. Mower comprising:
- a cutting mechanism (4) which, during work, extends transversely to the direction of work (A),
- a hitching structure (3) intended to be connected to a motor vehicle (1),
- a carrying beam (5) connected, on the one hand, to the cutting mechanism (4) by means of a first articulation (6a), the axis (K) of which is directed forwards, and, on the other hand, directly or indirectly to the hitching structure (3) by means of a second articulation (6b), the axis (J) of which is directed forwards and of a third articulation (6c), the axis (I) of which is directed upwards, which allows the second articulation (6b) to pivot with respect to the hitching structure (3),
- positioning means acting on the carrying beam (5) to allow the said carrying beam (5) and the cutting mechanism (4) to be moved jointly between at least one transport position and one other position, and vice versa, by pivoting of the carrying beam (5) and of the cutting mechanism (4) about the axis (I) of the third articulation (6c), and
- a lifting element (20) acting on the carrying beam (5) to allow the said carrying beam (5) and the cutting mechanism (4) to be moved jointly between a work position and a manoeuvring position,
***characterized in* that** the lifting element (20) is associated with a damping element (30) acting on the carrying beam (5) so as, in particular, to absorb the abrupt movements of the said carrying beam (5) and of the cutting mechanism (4) with respect to the hitching structure (3) when the said carrying beam (5) and the said cutting mechanism (4) are in the manoeuvring position respectively in a transport position.

2. Mower according to Claim 1, ***characterized in* that** the lifting element (20) and the damping element (30) are mounted directly or indirectly between the hitching structure (3) and the carrying beam (5).

3. Mower according to Claim 1 or 2, ***characterized in* that** the lifting element (20) and the damping element (30) are mounted in series.

4. Mower according to any one of Claims 1 to 3, ***characterized in* that** the lifting element (20) is a hydraulic lifting ram (21-22-23).

5. Mower according to any one of Claims 1 to 4, ***characterized in* that** the damping element (30) is an oleopneumatic damping ram (31-32-33).

6. Mower according to Claims 4 and 5, ***characterized in* that** the hydraulic lifting ram (21-22-23) and the oleopneumatic damping ram (31-32-33) are made with a common body (21-31) which has two chambers (21a, 31a), a first ram rod (22) emerging from one (21a) of the chambers (21a, 31a) being articulated directly or indirectly to the hitching structure (3), a second ram rod (32) emerging from the other chamber (31 a) being articulated directly or indirectly to the carrying beam (5).

7. Mower according to Claim 6, ***characterized in* that** the first ram rod (22) is that of the hydraulic lifting ram (21-22-23) and the second ram rod (32) is that of the oleopneumatic damping ram (31-32-33).

8. Mower according to Claim 6 or 7, ***characterized in* that** the second ram rod (32) is connected to the carrying beam (5) by means of a connecting rod (32) mounted so that it can pivot on the said carrying beam (5) and capable of bearing against a complementary stop (5b) secured to the said carrying beam (5).

9. Mower according to any one of Claims 1 to 8, ***characterized in* that** it additionally comprises a means (50) for preventing the cutting mechanism (4) from pivoting about the axis (K) of the first articulation (6a).

10. Mower according to Claim 9, ***characterized in* that** the said locking means (50) comprises an additional hydraulic ram (50a) mounted directly or indirectly between the cutting mechanism (4) and the carrying beam (5).

11. Mower according to Claim 10, ***characterized in* that** the said additional hydraulic ram (50a) is connected to the carrying beam (5) by means of a link rod (52) mounted so that it can pivot on the said carrying beam (5).

12. Mower according to Claims 4 and 11, ***characterized in* that** the hydraulic lifting ram (21-22-23) and the additional hydraulic ram (50a) are supplied in parallel, so as to cause the said hydraulic lifting ram (21-22-23) to extend and the said additional hydraulic ram (50a) to shorten.

13. Mower according to Claim 12, ***characterized in* that** the additional hydraulic ram (50a) comprises a return means (55) capable of storing up energy as the said additional hydraulic ram (50a) shortens.

14. Mower according to Claim 13, ***characterized in* that** the said return means (55) consists of a chamber (56) filled with air which is compressed as the additional hydraulic ram (50a) shortens.

15. Mower according to any one of Claims 1 to 14, ***characterized in* that** the positioning means are, in particular, capable of pivoting the carrying beam (5) and the cutting mechanism (4) approximately horizontally towards the rear of the tractor (1).

16. Mower according to any one of Claims 1 to 15, ***characterized in* that** it comprises a means of lightening the cutting mechanism (4) to make it possible to reduce the pressure with which the said cutting mechanism (4) rests on the ground.

17. Mower according to Claim 16, ***characterized in* that** the said lightening means acts directly or indirectly between the hitching structure (3) and the carrying beam (5).

18. Mower according to Claim 16 or 17, ***characterized in* that** the lightening means is an oleopneumatic lightening ram (3b).

19. Mower according to any one of Claims 1 to 18, ***characterized in* that** it is a disc mower (9) with or without elements for treating the cut product.
